# EUROPÄISCHE PATENTSCHRIFT

(11) **EP 3 805 533 B1**
(45) Veröffentlichungstag und Bekanntmachung des Hinweises auf die Patenterteilung: **28.12.2022**
(21) Anmeldenummer: 20210555.7
(22) Anmeldetag: 15.01.2020
(51) Int. Cl.: F01N 3/20, F01N 3/025

(54) **ABGASHEIZELEMENT**
EXHAUST GAS HEATING ELEMENT
ÉLÉMENT CHAUFFANT DE GAZ D'ÉCHAPPEMENT

(30) Priorität: 24.01.2019 DE 102019101679
(43) Veröffentlichungstag der Anmeldung: 14.04.2021
(62) Teilanmeldung aus: 20151864.4
(73) Patentinhaber: Purem GmbH, 66539 Neunkirchen (DE)
(72) Erfinder: Gaiser, Gerd, 72768 Reutlingen (DE)
(74) Vertreter: Ruttensperger Lachnit Trossin Gomoll

(56) Entgegenhaltungen:
- WO-A1-2017/151975
- CN-C- 100 419 227
- KR-A- 20120 117 457
- US-A1- 2018 119 591

## Beschreibung

Die vorliegende Erfindung betrifft ein Abgasheizelement für eine Abgasanlage einer Brennkraftmaschine.

Die immer strenger werdenden Anforderungen hinsichtlich des Schadstoffausstoßes von Brennkraftmaschinen erfordern spezielle Maßnahmen, welche dafür sorgen, dass auch in der Startphase einer Brennkraftmaschine bei kalten Komponenten einer Abgasanlage der Schadstoffausstoß gesenkt werden kann. In einer derartigen Startphase sind insbesondere die in einer Abgasanlage angeordneten Katalysatoreinheiten, wie zum Beispiel ein Dreiwegekatalysator, ein Oxidationskatalysator oder ein SCR-Katalysator, bei einer Temperatur, die im Allgemeinen nicht zum Auslösen der darin jeweils durchzuführenden katalytischen Reaktion ausreicht. Um diesem Problem entgegenzutreten, kann zum Erhöhen der Abgastemperatur und somit zum Erreichen einer schnelleren Erwärmung derartiger Katalysatoren bzw. auch Partikelfilter beispielsweise bei Diesel-Brennkraftmaschinen die Kraftstoffeinspritzung zu einem späten Zeitpunkt erfolgen bzw. bei Otto-Brennkraftmaschinen der Zündwinkel auf spät gestellt werden, was jedoch wesentliche Eingriffe in das Motormanagement erforderlich macht.

Die US 2018/119591 A1 offenbart eine Abgasheizeinheit nach dem Oberbegriff des Anspruchs 1, bei welcher ein Mantelheizleiterelement in spiralartiger Form gewunden ist. Zwischen den Windungsabschnitten des Mantelheizleiterelements ist eine mit mäanderartiger Struktur ausgebildete Wärmeübertragungsflächenformation angeordnet. In Scheitelbereichen der mäanderartigen Struktur sind Einsenkungen ausgebildet, in welche das zwischen seinen Windungsabschnitten die Wärmeübertragungsflächenformation aufnehmende Mantelheizleiterelement eingreifend positioniert ist.

Die Druckschrift CN 100 419 227 C offenbart einen Partikelfilter eines Dieselmotors. Der Partikelfilterkörper ist in einem Abschnitt aus einer Siliziumcarbid-Keramik in Spiralenform ausgebildet. Wird durch diesen Abschnitt Strom geleitet, so fungiert dieser Partikelfilterkörperabschnitt aufgrund der elektrischen Leitfähigkeit der Siliziumcarbid-Keramik als ein Heizelement.

Es ist die Aufgabe der vorliegenden Erfindung, eine Abgasheizeinheit für eine Abgasanlage einer Brennkraftmaschine vorzusehen, welche eine effiziente Erwärmung von Systembereichen der Abgasanlage insbesondere in einer Startphase einer Brennkraftmaschine ermöglicht.

Erfindungsgemäß wird diese Aufgabe gelöst durch eine Abgasheizeinheit für eine Abgasanlage einer Brennkraftmaschine, umfassend:
- ein Mantelheizleiterelement mit einem Mantel und einem in dem Mantel verlaufenden, von Isoliermaterial umgebenen elektrischen Heizleiter,
- eine an einer Außenseite des Mantels angeordnete und mit diesem in Wärmeübertragungskontakt stehende Wärmeübertragungsflächenformation.

Die Wärmeübertragungsflächenformation umfasst wenigstens ein das Mantelheizleiterelement schraubenwindungsartig umgebendes, vorzugsweise im Wesentlichen orthogonal zu einer Außenumfangswand des Mantels stehende Wärmeübertragungsflächen bereitstellendes Wärmeübertragungselement. Aufgrund dieser schraubenwindungsartigen Konfiguration wird bei geringer Bauteileanzahl und somit einfach zu realisierendem Aufbau eine große Oberfläche für die thermische Wechselwirkung mit die Abgasheizeinheit umströmendem Abgas bereitgestellt.

Der Einsatz eines derartigen hochtemperaturfähigen Mantelheizleiterelements ermöglicht die Bereitstellung sehr hoher Temperaturen im Bereich von 600°C bis 800°C am Mantel des Mantelheizleiterelements und damit auch im Bereich der mit dem Mantel in Wärmeübertragungskontakt stehenden Wärmeübertragungsflächenformation. Diese bereitgestellte Wärmeenergie kann genutzt werden, um Systembereiche der Abgasanlage zu erwärmen, beispielsweise indem diese Wärmeenergie von dem die Abgasheizeinheit umströmenden Abgas zu derartigen Systembereichen transportiert wird.

Für einen guten Wärmeübertrag zwischen dem Mantel und der Wärmeübertragungsflächenformation bei gleichwohl stabilem Aufbau wird vorgeschlagen, dass der Mantel mit Metallmaterial aufgebaut ist, oder/und dass die Wärmeübertragungsflächenformation mit dem Mantel reibschlüssig, vorzugsweise durch Aufpressen oder Aufschrumpfen, oder/und materialschlüssig, vorzugsweise durch Schweißen oder Löten, verbunden ist.

Bei einer besonders vorteilhaften Weiterbildung der erfindungsgemäßen Abgasheizeinheit kann eine Wärmeübertragungsfläche der Wärmeübertragungsflächenformation wenigstens bereichsweise mit katalytisch wirksamem Material bereitgestellt sein. Somit wird die Abgasheizeinheit nicht nur zur Erwärmung genutzt, sondern auch, um die darin bereitgestellte Wärme direkt zur Durchführung einer katalytischen Reaktion zu nutzen.

Beispielsweise kann wenigstens ein, vorzugsweise jedes Wärmeübertragungselement der Wärmeübertragungsflächenformation mit katalytisch wirksamem Material beschichtet sein.

Für eine stabile Anbindung einer derartigen Beschichtung an ein Wärmeübertragungselement ist es vorteilhaft, wenn das wenigstens eine Wärmeübertragungselement mit Aluminiummaterial, vorzugsweise einer Aluminiumlegierung, wie z.B. FeCrAlloy 1.4767, ausgebildet ist.

Insbesondere dann, wenn die Abgasheizeinheit als Dreiwegekatalysator oder als Diesel-Oxidationskatalysator wirksam sein soll, kann das katalytisch wirksame Material umfassen:
- Platin, oder/und
- Palladium, oder/und
- Rhodium.

Soll die Abgasheizeinheit als SCR-Katalysator wirksam sein, kann das katalytisch wirksame Material umfassen:
- Eisen-Zeolith-Material, oder/und
- Kupfer-Zeolith-Material, oder/und
- Vanadium-Oxid-Material.

Die vorliegende Erfindung betrifft ferner eine Abgasanlage für eine Brennkraftmaschine, umfassend wenigstens ein in einem Abgasströmungskanal angeordnetes, erfindungsgemäß aufgebautes Abgasheizelement.

Um die in der Abgasheizeinheit bereitgestellte und auf das Abgas übertragene Wärme in der Abgasanlage effizient nutzen zu können, ist vorzugsweise das Abgasheizelement in einer Abgasströmungsrichtung im Abgasströmungskanal stromaufwärts bezüglich einer Abgasbehandlungseinheit, insbesondere Katalysatoreinheit oder Partikelfiltereinheit, angeordnet.

Insbesondere dann, wenn die Abgasheizeinheit selbst katalytisch wirksam ausgebildet ist, ist es vorteilhaft, wenn das katalytisch wirksame Material und die Katalysatoreinheit dem gleichen Katalysatortyp zugeordnet sind. Dies bedeutet, dass dann, wenn beispielsweise die Abgasheizeinheit als Dreiwegekatalysator wirksam sein soll und aus diesem Grunde mit entsprechendem katalytisch wirksamem Material beschichtet oder ausgebildet ist, auch die stromab davon angeordnete Katalysatoreinheit vom Typ des Dreiwegekatalysators ist. Somit kann beispielsweise in einer Startphase die durch das Mantelheizleiterelement sehr schnell erwärmte Abgasheizeinheit als Katalysator wirksam sein, auch wenn der stromab dann folgende Dreiwegekatalysator aufgrund zu geringer Temperatur noch nicht katalytisch wirksam ist.

Für eine noch schnellere Erwärmung der Abgasanlage wird vorgeschlagen, dass wenigstens einer Abgasheizeinheit eine Kohlenwasserstoff-Abgabeanordnung zum Abgeben von Kohlenwasserstoff in den Abgasstrom stromaufwärts bezüglich der Abgasheizeinheit zugeordnet ist. Der an der heißen Oberfläche der Abgasheizeinheit reagierende Kohlenwasserstoff, also beispielsweise Benzin oder Diesel, setzt bei seiner Reaktion eine erhebliche Wärmemenge frei, die in der Umgebung der Abgasheizeinheit das dort strömende Abgas erwärmt und somit eine effiziente Erwärmung von weiter stromabwärts liegenden Systembereichen unterstützt.

Die vorliegende Erfindung wird nachfolgend mit Bezug auf die beiliegenden Figuren detailliert beschrieben. Es zeigt:
- Fig. 1: einen Abschnitt einer einen hochtemperaturfähigen Mantelheizer umfassenden, erfindungsgemäß aufgebauten Abgasheizeinheit in perspektivischer Ansicht;
- Fig. 2: die Abgasheizeinheit der Fig. 1 in Seitenansicht;
- Fig. 3: eine prinzipartige Darstellung einer Abgasanlage mit einer Abgasheizeinheit;
- Fig. 4: eine Ansicht der Abgasheizeinheit in einem Abgaskanal, betrachtet in Abgasströmungsrichtung;
- Fig. 5: eine der Fig. 4 entsprechende Ansicht einer weiteren alternativen Anordnung der Abgasheizeinheit;
- Fig. 6: eine weitere alternative Anordnung der Abgasheizeinheit in perspektivischer Darstellung;
- Fig. 7: eine weitere der Fig. 4 entsprechende Ansicht einer alternativen Anordnung der Abgasheizeinheit;
- Fig. 8: einen Ausschnitt eines mit katalytisch wirksamem Material beschichteten Wärmeübertragungselem ents;
- Fig. 9: eine Abgasanlage mit der Abgasheizeinheit stromaufwärts bezüglich einer Katalysatoreinheit;
- Fig. 10: eine Abgasanlage mit der in einem Abgasrohr stromaufwärts bezüglich einer Katalysatoreinheit angeordneten Abgasheizeinheit;
- Fig. 11: die Abgasheizeinheit mit dieser zugeordneter Kohlenwasserstoff-Abgabeanordnung.

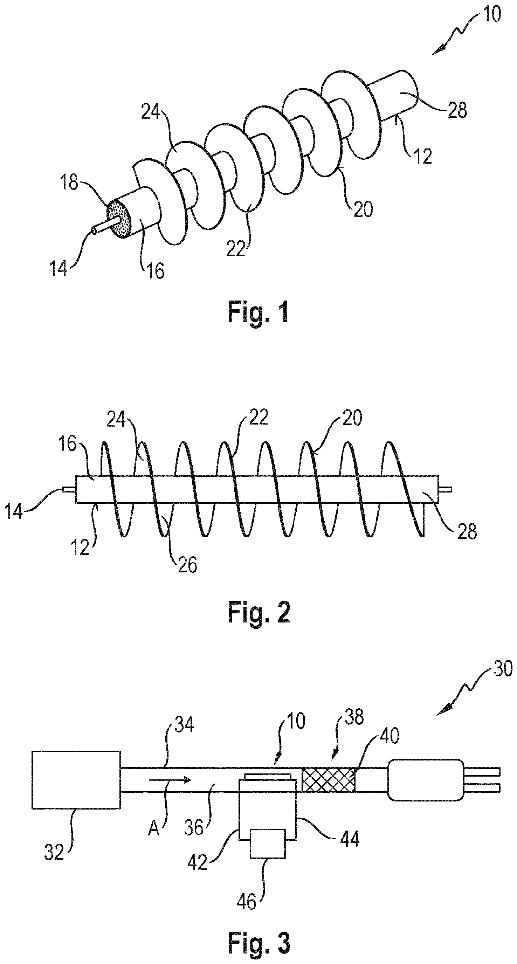

Die Fig. 1 und 2 zeigen eine erfindungsgemäß aufgebaute Abgasheizeinheit 10 für eine Abgasanlage einer Brennkraftmaschine. Die Abgasheizeinheit 10 umfasst ein insbesondere hochtemperaturfähiges Mantelheizleiterelement 12 mit einem in einem Kernbereich desselben angeordneten Heizleiter 14. Der Heizleiter 14 kann einen oder mehrere Heizdrähte umfassen und ist in einem von einem Mantel 16 umgebenen Innenraum durch ein Isoliermaterial 18, beispielsweise Keramikmaterial, umgeben.

An einer Außenoberfläche 28 des mit Metallmaterial, beispielsweise Stahlmaterial, aufgebauten Mantels 16 ist eine Wärmeübertragungsflächenformation 20 angeordnet. Im dargestellten Ausgestaltungsbeispiel umfasst die Wärmeübertragungsflächenformation 20 ein schraubenwindungsartig das Mantelheizleiterelement 12 umgebendes und an dessen Außenoberfläche 28 angebundenes Wärmeübertragungselement 22. An beiden im Wesentlichen in der Längserstreckungsrichtung des Mantelheizleiterelements 12 orientierten Seiten stellt das schraubenwindungsartig ausgebildete Wärmeübertragungselement 22 Wärmeübertragungsflächen 24, 26 bereit, welche von Abgas umströmbar sind und an welchen die vom Mantel 16 aufgenommene Wärme auf das Abgas übertragen werden kann. Selbstverständlich findet auch im Bereich der Außenoberfläche 28 des Mantels 16 ein Wärmeübertrag auf das diesen umströmende Abgas statt.

Das schraubenwindungsartig sich erstreckende Wärmeübertragungselement 22 ist an die Außenoberfläche 28 des Mantels 16 vorzugsweise materialschlüssig, beispielsweise durch Verlöten oder Verschweißen angebunden. Dies kann auch unterstützt oder alternativ dadurch bereitgestellt werden, dass das Wärmeübertragungselement 22 auf den Mantel 16 aufgepresst oder aufgeschrumpft wird.

Mit der schraubenwindungsartig ausgebildeten Struktur des Wärmeübertragungselements 22 wird eine sehr große Gesamtfläche für die Wärmeübertragungsfläche durch ein einziges Bauteil bereitgestellt.

Die Fig. 3 zeigt in prinzipartiger Darstellung den Aufbau einer Abgasanlage 30 für eine Brennkraftmaschine 32. Die Abgasanlage 30 umfasst in einem ein- oder mehrteiligen Abgasrohr 34 einen Abgaskanal 36. Im Abgaskanal 36 ist stromaufwärts bezüglich einer Abgasbehandlungseinheit 38, beispielsweise einer Katalysatoreinheit 40, eine Abgasheizeinheit 10 angeordnet, die den vorangehend mit Bezug auf die Fig. 1 und 2 beschriebenen Aufbau aufweist. Im dargestellten Ausgestaltungsbeispiel ist die Abgasheizeinheit 10 bzw. deren Mantelheizleiterelement 12 im Wesentlichen langgestreckt bzw. geradlinig sich in der Abgasströmungsrichtung im Abgaskanal 36 erstreckend stromaufwärts der Abgasbehandlungseinheit angeordnet. An den beiden Längsenden der Abgasheizeinheit 10 ist diese in Kontakt mit elektrischen Leitungen 42, 44, über welche die Abgasheizeinheit 10 an eine Spannungsquelle 46 angeschlossen ist.

Insbesondere in einer Startphase der Brennkraftmaschine 32, in welcher die Abgasanlage 30, insbesondere auch die Katalysatoreinheit 14 kalt ist und damit eine katalytische Reaktion darin nicht ausgelöst werden kann, kann die Abgasheizeinheit 10 durch Anlegen einer elektrischen Spannung erregt werden, so dass das Mantelheizleiterelement 12 und auch die Wärmeübertragungsflächenformation 20 erwärmt werden. Das mit den Wärmeübertragungsflächen 24, 26 bzw. der Außenoberfläche 28 in Kontakt tretende Abgas nimmt Wärme auf und transportiert diese zur Katalysatoreinheit 40, so dass bei noch vergleichsweise geringer Abgastemperatur bzw. unterstützend zu der in den Abgasen bereits transportierten Wärmeenergie eine schnellere Erwärmung der Katalysatoreinheit 40 und damit ein schnelleres Erreichen derjenigen Temperatur, bei welcher die katalytische Reaktion einsetzen kann, gewährleistet ist.

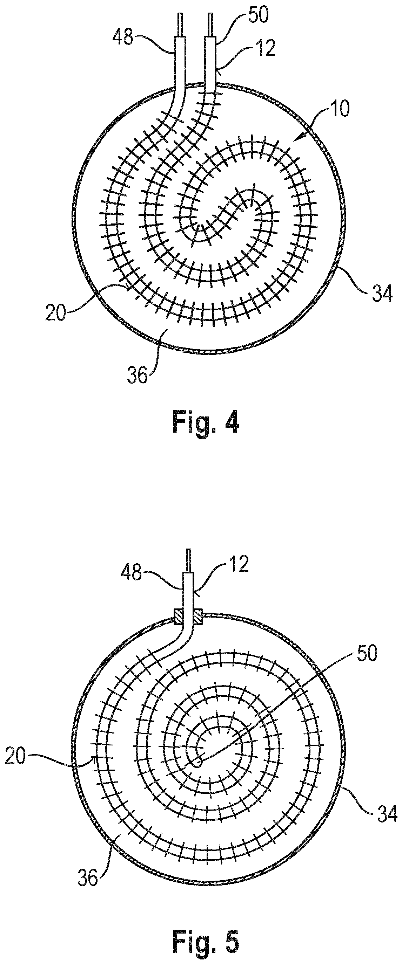

Die Fig. 4 bis 7 zeigen verschiedene räumliche Anordnungen einer derartigen Abgasheizeinheit 10 im Abgaskanal 36. So zeigt beispielsweise die Fig. 4 eine im Wesentlichen in einer zur Abgasströmungsrichtung A orthogonal stehenden Ebene gewundene, insbesondere nach Art einer Doppelspirale gewundene Konfiguration des Mantelheizleiterelements 12 mit der an dessen Außenumfangsfläche 28 vorgesehenen Wärmeübertragungsflächenformation 20. Die beiden zur elektrischen Kontaktierung außerhalb des Abgasrohrs freiliegenden Enden 48, 50 des Mantelheizleiterelements 12 liegen im gleichen Längenbereich des Abgasrohrs 34 und können somit in einfacher Weise elektrisch an die Spannungsquelle 46 angeschlossen werden.

Die Fig. 5 zeigt eine Konfiguration, bei welcher das Mantelheizleiterelement 12 wieder in einer zur Abgasströmungsrichtung A im Wesentlichen orthogonalen Ebene in einer Einfachspirale gewunden ist. Der im Mantelheizleiterelement 12 angeordnete Heizleiter 14 weist in diesem Ausgestaltungsfall zwei Heizdrähte auf, die nebeneinander verlaufen und an dem im zentralen Bereich positionierten Ende 50 des Mantelheizleiterelements 12 ineinander übergehen, so dass an dem außerhalb des Abgasrohrs 34 liegenden Ende 48 des Mantelheizleiterelements 12 beide Heizdrähte kontaktiert werden können.

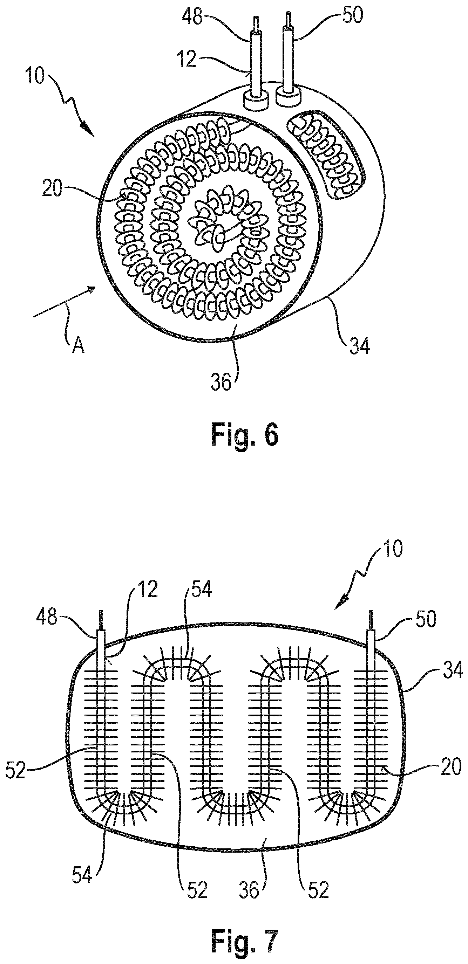

Fig. 6 zeigt eine Konfiguration, bei welcher das Mantelheizleiterelement 12 mit zwei spiralartigen Windungskonfigurationen aufeinanderfolgend angeordnet ist. Somit können die beiden elektrisch zu kontaktierenden Enden 48, 50 beispielsweise mit einem Abstand in der Abgasströmungsrichtung A durch das Abgasrohr 34 hindurchgeführt werden, welcher näherungsweise auch dem Abstand der beiden jeweils im Wesentlichen in einer Ebene liegenden, spiralartigen Windungsbereiche entspricht.

Die Fig. 7 zeigt eine Konfiguration, bei welcher die Abgasheizeinheit 10 in einem Abgasrohr 34 oder einem abgasführenden Gehäuse mit abgeflachtem, näherungsweise rechteckigem Querschnitt angeordnet ist. Das Mantelheizleiterelement 12 ist dabei mäanderartig gewunden angeordnet und weist näherungsweise parallel zueinander verlaufende, jeweils im Wesentlichen geradlinig sich erstreckende Mäanderabschnitte 52 auf, die durch jeweilige Krümmungsbereiche 54 des Mantelheizleiterelements 12 verbunden sind. Auf diese Art und Weise lässt sich die Gestalt der Abgasheizeinheit 10 leicht an die Umfangskontur des diese aufnehmenden Abgasrohrs 34 oder Gehäuses anpassen, wozu auch beiträgt, dass die Wärmeübertragungsflächenformation 20 schraubenwindungsartig ausgebildet an der Außenoberfläche 28 des Mantelheizleiterelements 12 angeordnet ist und sich somit leicht an die gekrümmte oder gebogene Konfiguration des Mantelheizleiterelements 12 anpassen lässt.

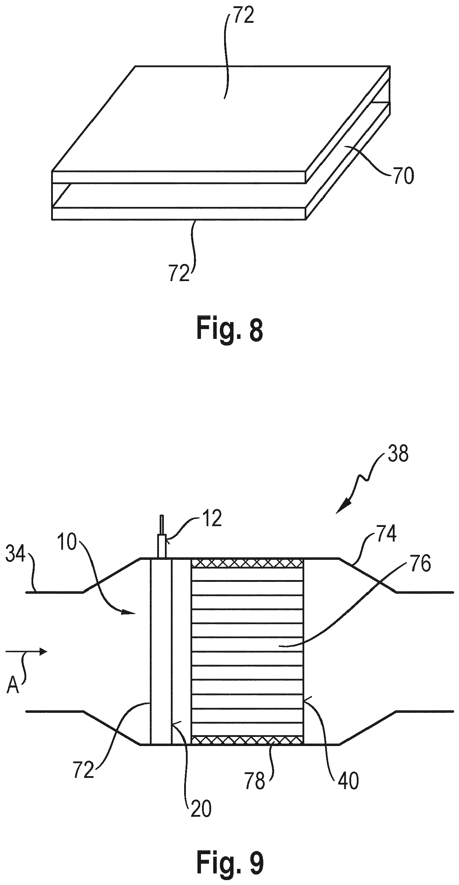

Die Fig. 8 zeigt einen Ausschnitt eines beispielsweise plattenartig ausgebildeten Wärmeübertragungselements 70, das an seiner von Abgas umströmbaren Außenoberfläche wenigstens bereichsweise mit katalytisch wirksamem Material 72 beschichtet ist. Für eine stabile Anbindung von derartigem katalytisch wirksamem Material ist es vorteilhaft, ein derartiges Wärmeübertragungselement 70 aus Aluminium oder einer Aluminiumlegierung mit hohem Aluminiumanteil bereitzustellen. Üblicherweise wird beim Aufbringen von derartigem katalytisch wirksamem Material 72 zunächst die metallische Oberfläche mit einer als Washcoat bezeichneten porösen, oxidkeramischen Beschichtung mit einer großen inneren Oberfläche überzogen. Auf diese Beschichtung wird dann das katalytisch wirksame Material beispielsweise in einem so genannten Imprägnierungsprozess aufgebracht. Durch das Aufbringen von katalytisch wirksamem Material 72 auf ein bzw. mehrere Wärmeübertragungselemente 70 wird die Möglichkeit geschaffen, bei Erregung eines oder mehrerer damit verbundener Mantelheizleiterelemente die Wärmeübertragungselemente 70 bzw. die katalytisch wirksame Beschichtung 72 sehr schnell auf eine Temperatur zu bringen, bei welcher beim Umströmen mit Abgas die katalytische Reaktion erfolgen kann. Dies ermöglicht es, auch in der Startphase einer Brennkraftmaschine nahezu ohne zeitliche Verzögerung eine katalytische Wirkung in der Abgasanlage bereitzustellen und somit auch unmittelbar nach dem Anlassen einer Brennkraftmaschine den Schadstoffausstoß deutlich zu senken.

Eine derartige Beschichtung mit katalytisch wirksamem Material kann unabhängig von der Ausgestaltung der Wärmeübertragungsflächenformation bereitgestellt werden. Insbesondere kann bei jeder der in den Figuren 1-7 dargestellten Konfigurationen eines oder mehrere der Wärmeübertragungselemente an zumindest einer Seite, vorzugsweise aber vollständig mit katalytisch wirksamem Material überzogen sein.

Abhängig davon, von welchem Typ die so bereitgestellte Katalysatorwirkung sein soll, wird das katalytisch wirksame Material 72 ausgewählt. Soll beispielsweise die Abgasheizeinheit 10 als Dreiwegekatalysator wirksam sein, kann das katalytisch wirksame Material Platin, Palladium, Rhodium oder Mischungen davon enthalten. Auch die Temperaturbeständigkeit des katalytisch wirksamen Materials 72 verbessernde Strukturpromotoren können in dieser Beschichtung vorgesehen sein. Soll die Wirkung eines Diesel-Oxidationskatalysators erreicht werden, ist es vorteilhaft, als Hauptkomponenten des katalytisch wirksamen Materials 72 Platin und Palladium einzusetzen. Auch Mischoxide können zur Anwendung kommen. Soll die Wirkung eines SCR-Katalysators erreicht werden, ist es vorteilhaft, das katalytisch wirksame Material mit Eisen-Zeolith-Material, Kupfer-Zeolith-Material oder Vanadium-Oxid-Material, wie z. B. Vanadium-Pentoxid, bereitzustellen.

Dieser Katalysatoreffekt kann dann in besonders effizienter Weise genutzt werden, wenn, wie die Fig. 9 dies veranschaulicht, eine derartige mit katalytisch wirksamem Material bereitgestellte Abgasheizeinheit 10 beispielsweise in einem Katalysatorgehäuse 74 stromaufwärts bezüglich der darin angeordneten Katalysatoreinheit 40 angeordnet ist. Es sei darauf hingewiesen, dass in üblicher Bauart die Katalysatoreinheit 40 einen beispielsweise mit katalytisch wirksamem Material aufgebauten oder überzogenen Monolithen 76 aufweisen kann, der durch eine diese umgebenden Fasermatte 78 im Katalysatorgehäuse 74 gehalten sein kann.

Bei derartigem Aufbau ist vorzugsweise vorgesehen, dass das an der Abgasheizeinheit 10 vorgesehene katalytisch wirksame Material 72 und die Katalysatoreinheit 40 den gleichen Typ einer katalytischen Reaktion bereitstellen. Somit kann in einer Startphase, also unmittelbar nach dem Anlassen der beispielsweise in Fig. 3 veranschaulichten Brennkraftmaschine 32, durch elektrische Erregung sehr schnell die Abgasheizeinheit 10 mit dem daran vorgesehenen katalytisch wirksamen Material 72 auf die zur Durchführung der katalytischen Reaktion erforderliche Temperatur gebracht werden und somit als Katalysator wirksam werden, noch bevor die Katalysatoreinheit 40 die dazu erforderliche Temperatur erreicht hat. Die Katalysatoreinheit 40 wird einerseits durch das auch in der Startphase von der Brennkraftmaschine 32 ausgestoßene Abgas, andererseits durch das die Abgasheizeinheit 10 umströmende Abgas erwärmt und somit ebenfalls schnell auf eine ausreichend hohe Temperatur gebracht, um auch in dieser die katalytische Reaktion durchzuführen. Ist diese Temperatur erreicht, kann die Erregung des Mantelheizleiterelements 12 der Abgasheizeinheit 10 beendet werden. Dies kann entweder durch Bereitstellung eines Temperatursignals erkannt werden, oder es kann ein definierter Zeitraum bereitgestellt sein, über welchen hinweg in der Startphase der Brennkraftmaschine 32 die Abgasheizeinheit 10 erregt wird.

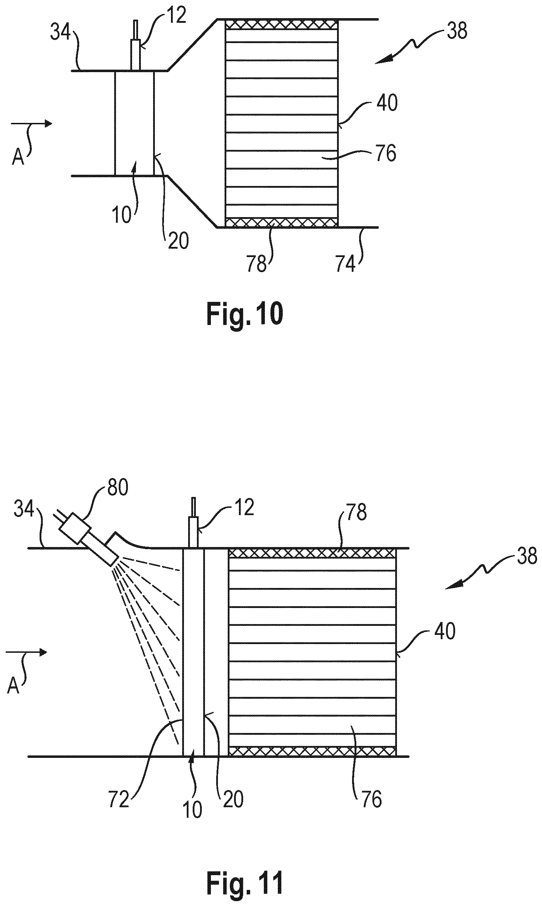

Die Fig. 10 zeigt eine Ausgestaltung, bei welcher die Abgasheizeinheit 10 stromaufwärts bezüglich der Katalysatoreinheit 40 nicht im Katalysatorgehäuse 74, sondern in dem an dessen stromaufwärtiges Ende anschließenden Abgasrohr 34 untergebracht ist. Eine derartige Anordnung kann beispielsweise dann von Vorteil sein, wenn die Abgasheizeinheit 10 die in den Fig. 1 und 2 dargestellte langgestreckte Konfiguration aufweisen soll.

Die Fig. 11 zeigt eine Abgasanlage 30, bei welcher in Zuordnung zu der beispielsweise gleichermaßen mit katalytisch wirksamem Material 72 bereitgestellten Abgasheizeinheit 10 eine Kohlenwasserstoff-Abgabeanordnung 80 vorgesehen ist. Diese kann nach Art eines Injektors Kohlenwasserstoff, also beispielsweise den auch für den Betrieb der Brennkraftmaschine 32 eingesetzten Brennstoff, in Richtung auf die Abgasheizeinheit 10 zu in den Abgasstrom einspritzen. Der Kohlenwasserstoff reagiert an der heißen Oberfläche der Abgasheizeinheit 10, so dass die Umsetzung des Kohlenwasserstoffs Reaktionswärme freisetzt, die zusätzlich auf das in Richtung der stromabwärts dann folgenden Katalysatoreinheit 40 strömende Abgas übertragen werden kann. Eine derartige Ausgestaltung ist insbesondere dann von Vorteil, wenn die Katalysatoreinheit 40 als SCR-Katalysator ausgebildet ist, an welcher unter Umsetzung des durch eine nicht dargestellte Reduktionsmittel-Abgabeanordnung eingespritzten Reduktionsmittels, also beispielsweise einer Harnstoff/WasserLösung, eine selektive katalytische Reduktion durchgeführt wird. Auch kann ein als Abgasbehandlungseinheit 38 eingesetzter Partikelfilter unabhängig vom Betrieb der Brennkraftmaschine 32 durch die Einspritzung von Kohlenwasserstoff regeneriert werden.

Bei einer weiteren Ausgestaltungsart kann im Abgasstrom transportierter Kohlenwasserstoff auch dadurch bereitgestellt werden, dass dieser gezielt von der Brennkraftmaschine 32 ausgestoßen wird. Hierzu kann beispielsweise durch entsprechende Einstellung des Zündwinkels bzw. durch späte Kraftstoffeinspritzung dafür gesorgt werden, dass bei der in der Brennkraftmaschine 32 stattfindenden Verbrennung nur ein Teil des Brennstoffs zündet, während ein Teil des Brennstoffs unverbrannt ausgestoßen wird und zur Umsetzung an der Abgasheizeinheit 10 oder/und der Abgasbehandlungseinheit 38 zur Verfügung steht.

## Patentansprüche

1. Abgasheizeinheit für eine Abgasanlage einer Brennkraftmaschine, umfassend:
- ein Mantelheizleiterelement (12) mit einem Mantel (16) und einem in dem Mantel (16) verlaufenden, von Isoliermaterial (18) umgebenen elektrischen Heizleiter (14),
- eine an einer Außenseite des Mantels (16) angeordnete und mit diesem in Wärmeübertragungskontakt stehende Wärmeübertragungsflächenformation (20),
**dadurch gekennzeichnet, dass** die Wärmeübertragungsflächenformation (20) wenigstens ein das Mantelheizleiterelement (12) schraubenwindungsartig umgebendes Wärmeübertragungselement (22) umfasst.

2. Abgasheizeinheit nach Anspruch 1, **dadurch gekennzeichnet, dass** der Mantel (16) mit Metallmaterial aufgebaut ist, oder/und dass die Wärmeübertragungsflächenformation (20) mit dem Mantel (16) reibschlüssig, vorzugsweise durch Aufpressen oder Aufschrumpfen, oder/und materialschlüssig, vorzugsweise durch Schweißen oder Löten, verbunden ist.

3. Abgasheizeinheit nach Anspruch 1 oder 2, **dadurch gekennzeichnet, dass** das Wärmeübertragungselement (22) orthogonal zu einer Außenumfangswand des Mantels stehende Wärmeübertragungsflächen (24, 26) bereitstellt.

4. Abgasheizeinheit nach Anspruch 3, **dadurch gekennzeichnet, dass** das Mantelheizleiterelement (12) wenigstens bereichsweise sich geradlinig erstreckend ausgebildet ist oder/und das Mantelheizleiterelement (12) wenigstens bereichsweise sich schraubenwindungsartig oder/und spiralartig erstreckend ausgebildet ist oder/und das Mantelheizleiterelement (12) wenigstens bereichsweise sich mäanderartig erstreckend ausgebildet ist.

5. Abgasheizeinheit nach einem der vorangehenden Ansprüche, **dadurch gekennzeichnet, dass** eine Wärmeübertragungsfläche der Wärmeübertragungsflächenformation (20) wenigstens bereichsweise mit katalytisch wirksamem Material (72) bereitgestellt ist.

6. Abgasheizeinheit nach Anspruch 5, **dadurch gekennzeichnet, dass** wenigstens ein, vorzugsweise jedes Wärmeübertragungselement (70) der Wärmeübertragungsflächenformation mit katalytisch wirksamem Material (72) beschichtet ist.

7. Abgasheizeinheit nach Anspruch 6, **dadurch gekennzeichnet, dass** das wenigstens eine Wärmeübertragungselement (70) mit Aluminiummaterial, vorzugsweise einer Aluminiumlegierung, ausgebildet ist.

8. Abgasheizeinheit nach einem der Ansprüche 5-7, **dadurch gekennzeichnet, dass** das katalytisch wirksame Material (72) umfasst:
- Platin, oder/und
- Palladium, oder/und
- Rhodium.

9. Abgasheizeinheit nach einem der Ansprüche 5-8, **dadurch gekennzeichnet, dass** das katalytisch wirksame Material (72) umfasst:
- Eisen-Zeolith-Material, oder/und
- Kupfer-Zeolith-Material, oder/und
- Vanadium-Oxid-Material.

10. Abgasanlage für eine Brennkraftmaschine, umfassend wenigstens eine in einem Abgasströmungskanal (36) angeordnete Abgasheizeinheit (10) nach einem der vorangehenden Ansprüche.

11. Abgasanlage nach Anspruch 10, **dadurch gekennzeichnet, dass** die Abgasheizeinheit (10) in einer Abgasströmungsrichtung (A) im Abgasströmungskanal (36) stromaufwärts bezüglich einer Abgasbehandlungseinheit (38), vorzugsweise Katalysatoreinheit (40) oder Partikelfiltereinheit, angeordnet ist.

12. Abgasanlage nach Anspruch 11, sofern auf einen der Ansprüche 5-9 rückbezogen, **dadurch gekennzeichnet, dass** das katalytisch wirksame Material (72) und die Katalysatoreinheit (40) dem gleichen Katalysatortyp zugeordnet sind.

13. Abgasanlage nach einem der Ansprüche 10-12, **dadurch gekennzeichnet, dass** wenigstens einer Abgasheizeinheit (10) eine Kohlenwasserstoff-Abgabeanordnung (80) zum Abgeben von Kohlenwasserstoff in den Abgasstrom stromaufwärts bezüglich des Abgasheizelements (10) zugeordnet ist.

## Claims

1. Exhaust gas heating unit for an exhaust system of an internal combustion engine, comprising:
- a jacket heating conductor element (12) with a jacket (16) and with an electrical heating conductor (14) which extends in the jacket (16) and is surrounded by insulating material (18),
- a heat transfer surface formation (20) which is arranged on an outer side of the jacket (16) and is in heat transfer contact with the same,
**characterized in that** the heat transfer surface formation (20) comprises at least one heat transfer element (22), which surrounds the jacket heating conductor element (12) in a helical manner.

2. Exhaust gas heating unit in accordance with claim 1, **characterized in that** the jacket (16) is made of a metallic material, or/and that the heat transfer surface formation (20) is connected to the jacket (16) in a frictionally engaged manner, preferably by pressing on or shrinking on, or/and by connection in substance, preferably by welding or soldering.

3. Exhaust gas heating unit in accordance with claim 1 or 2, **characterized in that** the heat transfer element (22) provides heat transfer surfaces (24, 26) which are at right angles to an outer circumferential wall of the jacket.

4. Exhaust gas heating unit according to claim 3, **characterized in that** the jacket heating conductor element (12) is configured as extending linearly in at least some areas, or/and the jacket heating conductor element (12) is configured as extending in a helical manner or/and in a spiral-like manner in at least some areas, or/and the jacket heating conductor element (12) is configured as extending in a meandering manner in at least some areas.

5. Exhaust gas heating unit in accordance with one of the preceding claims, **characterized in that** a heat transfer surface of the heat transfer surface formation (20) is provided with a catalytically active material (72) in at least some areas.

6. Exhaust gas heating unit in accordance with claim 5, **characterized in that** at least one heat transfer element (70), preferably each heat transfer element (70) of the heat transfer surface formation is coated with catalytically active material (72).

7. Exhaust gas heating unit in accordance with claim 6, **characterized in that** the at least one heat transfer element (70) is made of aluminum material, preferably an aluminum alloy.

8. Exhaust gas heating unit in accordance with one of the claims 5-7, **characterized in that** the catalytically active material (72) comprises:
- platinum, or/and
- palladium, or/and
- rhodium.

9. Exhaust gas heating unit in accordance with one of the claims 5-8, **characterized in that** the catalytically active material (72) comprises:
- iron zeolite material, or/and
- copper zeolite material, or/and
- vanadium oxide material.

10. Exhaust system for an internal combustion engine, comprising at least one exhaust gas heating unit (10) in accordance with one of the preceding claims, which is arranged in an exhaust gas flow duct (36).

11. Exhaust system in accordance with claim 10, **characterized in that** the exhaust gas heating unit (10) is arranged in an exhaust gas flow direction (A) in the exhaust gas flow duct (36) upstream in relation to an exhaust gas treatment unit (38), preferably a catalytic converter unit (40) or a particle filter unit.

12. Exhaust system in accordance with claim 11, if referred back to one of the claims 5-9, **characterized in that** the catalytically active material (72) and the catalytic converter unit (40) are associated with the same type of catalytic converter.

13. Exhaust system in accordance with one of the claims 10-12, **characterized in that** a hydrocarbon release device (80) is associated with at least one exhaust gas heating unit (10) for releasing hydrocarbon into the exhaust gas stream upstream in relation to the exhaust gas heating element (10).

## Revendications

1. Unité de chauffage de gaz d'échappement pour un système d'échappement d'un moteur à combustion interne, comprenant :
- un élément conducteur chauffant à gaine (12) avec une gaine (16) et avec un conducteur chauffant électrique (14) qui s'étend dans la gaine (16) et est entouré d'un matériau isolant (18),
- une formation de surface de transfert de chaleur (20) qui est disposée sur un côté extérieur de la gaine (16) et qui est en contact de transfert de chaleur avec celle-ci,
**caractérisé en ce que** la formation de surface de transfert de chaleur (20) comprend au moins un élément de transfert de chaleur (22), qui entoure l'élément conducteur chauffant à gaine (12) de manière hélicoïdale.

2. Unité de chauffage de gaz d'échappement selon la revendication 1, **caractérisée en ce que** la gaine (16) est constituée d'un matériau métallique, ou/et que la formation de surface de transfert de chaleur (20) est reliée à la gaine (16) par une liaison de friction, de préférence par pressage ou par emmanchement, ou/et par une liaison de substance, de préférence par soudage ou brasage.

3. Unité de chauffage de gaz d'échappement selon la revendication 1 ou 2, **caractérisée en ce que** l'élément de transfert de chaleur (22) prévoit des surfaces de transfert de chaleur (24, 26) qui sont à angle droit par rapport à une paroi circonférentielle extérieure de la gaine.

4. Unité de chauffage de gaz d'échappement selon la revendication 3, **caractérisée en ce que** l'élément conducteur chauffant à gaine (12) est configuré en s'étendant de manière linéaire dans au moins certaines zones, et/ou l'élément conducteur chauffant à gaine (12) est configuré en s'étendant de manière hélicoïdale et/ou en forme de spirale dans au moins certaines zones, et/ou l'élément conducteur chauffant à gaine (12) est configuré en s'étendant en méandres dans au moins certaines zones.

5. Unité de chauffage de gaz d'échappement selon l'une des revendications précédentes, **caractérisée en ce qu'**une surface de transfert de chaleur de la formation de surface de transfert de chaleur (20) est formée avec un matériau catalytiquement actif (72) dans au moins certaines zones.

6. Unité de chauffage de gaz d'échappement selon la revendication 5, **caractérisée en ce qu'**au moins un élément de transfert de chaleur (70), de préférence chaque élément de transfert de chaleur (70) de la formation de surface de transfert de chaleur est revêtu d'un matériau catalytiquement actif (72).

7. Unité de chauffage de gaz d'échappement selon la revendication 6, **caractérisée en ce que** ledit au moins un élément de transfert de chaleur (70) est constitué d'un matériau en aluminium, de préférence d'un alliage d'aluminium.

8. Unité de chauffage de gaz d'échappement selon l'une des revendications 5-7, **caractérisée en ce que** le matériau catalytiquement actif (72) comprend :
- du platine, ou/et
- du palladium, ou/et
- du rhodium.

9. Unité de chauffage de gaz d'échappement selon l'une des revendications 5-8, **caractérisée en ce que** le matériau catalytiquement actif (72) comprend :
- un matériau zéolithique à base de fer, ou/et
- un matériau zéolithique à base de cuivre, ou/et
- un matériau à base d'oxyde de vanadium.

10. Système de gaz d'échappement pour un moteur à combustion interne, comprenant au moins une unité de chauffage de gaz d'échappement (10) selon l'une des revendications précédentes, qui est disposée dans un conduit d'écoulement de gaz d'échappement (36).

11. Système de gaz d'échappement selon la revendication 10, **caractérisé en ce que** l'unité de chauffage de gaz d'échappement (10) est disposée dans un sens d'écoulement de gaz d'échappement (A) dans le conduit d'écoulement de gaz d'échappement (36) en amont d'une unité de traitement de gaz d'échappement (38), de préférence une unité de catalyseur (40) ou une unité de filtre à particules.

12. Système de gaz d'échappement selon la revendication 11, s'il se réfère à l'une des revendications 5-9, **caractérisé en ce que** le matériau catalytique actif (72) et l'unité de catalyseur (40) sont associés au même type de catalyseur.

13. Système de gaz d'échappement selon l'une des revendications 10-12, **caractérisé en ce qu'**un dispositif de libération d'hydrocarbures (80) est associé à au moins une unité de chauffage de gaz d'échappement (10) pour libérer des hydrocarbures dans le flux de gaz d'échappement en amont par rapport à l'élément de chauffage de gaz d'échappement (10).
